(19) Europäisches Patentamt
European Patent Office
Office européen des brevets

(11) **EP 1 347 562 B1**

(12) **EUROPÄISCHE PATENTSCHRIFT**

(45) Veröffentlichungstag und Bekanntmachung des Hinweises auf die Patenterteilung:
**06.07.2011 Patentblatt 2011/27**

(51) Int Cl.:
*H02M 3/156* (2006.01)     *H02M 3/157* (2006.01)

(21) Anmeldenummer: **03100559.8**

(22) Anmeldetag: **06.03.2003**

(54) **Verfahren zum Steuern oder Regeln des Stromflusses durch einen induktiven Verbraucher**

Method for controlling or regulating current flow through an inductive load

Méthode pour commander ou régler le courant dans une charge inductive

(84) Benannte Vertragsstaaten:
**DE FR IT**

(30) Priorität: **13.03.2002 DE 10211057**

(43) Veröffentlichungstag der Anmeldung:
**24.09.2003 Patentblatt 2003/39**

(73) Patentinhaber: **Continental Automotive GmbH 30165 Hannover (DE)**

(72) Erfinder:
• **Kijima, Masamichi
417-0851, Fuji-City (JP)**
• **Michau, Peter
38102, Braunschweig (DE)**

(56) Entgegenhaltungen:
**EP-A- 0 895 264     US-A- 6 147 848**

**Beschreibung**

Die Erfindung betrifft ein Verfahren zum Steuern oder Regeln des Stromflusses durch einen induktiven Verbraucher gemäß dem 0bergebgriff des Patentanspruchs 1.

Speziell in der Kraftfahrzeugelektronik wird der Stromfluss durch induktive Verbraucher, insbesondere in Form von elektrisch betätigten Aktuatoren, wie Ventilen oder Elektromotoren, häufig mittels Pulsweitenmodulation (PWM) gesteuert oder geregelt. Hierzu wird ein steuerbares Schaltmittel, beispielsweise ein Transistor, in Reihe zu dem Verbraucher geschaltet. Durch Schließen und Öffnen des Schaltmittels ist es möglich, den Verbraucher mit einer Versorgungsspannungsquelle zu verbinden beziehungsweise von dieser zu trennen. Um auch bei geöffnetem Schaltmittel einen Stromfluss durch den Verbraucher zu ermöglichen, ist in Parallelschaltung zum Verbraucher üblicher Weise eine Freilaufdiode vorgesehen. Die Steuerung oder Regelung des Stromflusses durch den induktiven Verbraucher erfolgt derart, dass das Schaltmittel mit einem getakteten Steuersignal beaufschlagt wird, so dass sich im Verbraucher im zeitlichen Mittel ein gewünschter Strom einstellt.

Der Stromfluss durch den induktiven Verbraucher ist somit abhängig vom Tastverhältnis dieses getakteten Steuersignals. Als Tastverhältnis wird dabei üblicher Weise das Verhältnis zwischen der Zeitdauer, in der das Schaltmittel geschlossen ist - im folgenden als Einschaltzeit bezeichnet - und der Gesamtdauer einer Periode des Steuersignals bezeichnet. Ebenso kann auch eine andere entsprechende Größe als Tastverhältnis verwendet werden. So kann beispielsweise des Verhältnis zwischen der Einschaltzeit und der Ausschaltzeit - Zeitdauer, in der das Schaltmittel geöffnet ist - verwendet werden.

Entscheidendes Kriterium für die Steuer- oder Regelgüte ist somit eine exakte Festlegung des notwendigen Tastverhältnisses des zur Steuerung des Schaltmittels verwendeten PWM-Signals. Das Dokument EP 0 895 264 offenbart ein Verfahren nach dem Oberbegriff des Anspruchs 1.

Aufgabe der Erfindung ist es daher, ein Verfahren zum Steuern oder Regeln des Stromflusses durch einen induktiven Verbraucher mittels Pulsweitenmodulation anzugeben, bei dem das Tastverhältnis des Steuersignals derart bestimmt wird, dass eine hohe Steuer- beziehungsweise Regelgüte gewährleistet ist.

Diese Aufgabe wird durch ein Verfahren mit den Merkmalen des Patentanspruchs 1 gelöst. Vorteilhafte Weiterbildungen der Erfindung sind in den Unteransprüchen niedergelegt.

Eine Schaltungsanordnung, auf die das erfindungsgemäße Verfahren anwendbar ist, umfasst ein in Reihe zu einem induktiven Verbraucher geschaltetes steuerbares Schaltmittel und eine parallel zu dem induktiven Verbraucher geschaltete Freilaufdiode. Dem Schaltmittel wird ein pulsweitenmoduliertes Steuersignal zugeführt, so dass der induktive Verbraucher von einem durch ein Tastverhältnis des pulsweitenmodulierten Steuersignals bestimmten Strom durchflossen wird. Das Tastverhältnis wird dabei erfindungsgemäß abhängig von einer Versorgungsspannung, einem Sollwert der Effektivspannung am Verbraucher, einem durch den Verbraucher fließenden Strom, einem Widerstandswert des Schaltmittels im durchgeschalteten Zustand des Schaltmittels und einer Spannung an der Freilaufdiode im geöffneten Zustand des Schaltmittels festgelegt.

In einer bevorzugten Ausführungsform wird das Tastverhältnis außerdem abhängig von einem Korrekturfaktor festgelegt, wobei der Korrekturfaktor abhängig ist von dem einzustellenden Tastverhältnis, dem durch den Verbraucher fließenden Strom, dem Widerstandswert des Schaltmittels im durchgeschalteten Zustand des Schaltmittels, der Spannung an der Freilaufdiode, den ohmschen Widerständen des Verbrauchers und der Verbindungsleitungen sowie einer Induktivität des Verbrauchers.

Ein Ausführungsbeispiel der Erfindung wird im folgenden anhand der Zeichnungen erläutert. Es zeigen:

Figur 1   ein Prinzipschaltbild eines Lastkreises, auf den das erfindungsgemäße Verfahren anwendbar ist,

Figur 2   den Spannungsverlauf an einem Aktuator bei Steuerung des Stromflusses mittels eines pulsweitenmodulierten Steuersignals,

Figur 3   den Spannungsverlauf an einer Diode abhängig vom Strom und von der Temperatur,

Figur 4   ein Blockschaltbild eines Regelkreises zur Steuerung und/oder Regelung des Stromflusses durch einen Lastkreis gemäß Figur 1 und

Figur 5   ein Blockschaltbild des Effektivspannungs-Berechnungseinheit gemäß Figur 4 mit Regelung und Vorsteuerung.

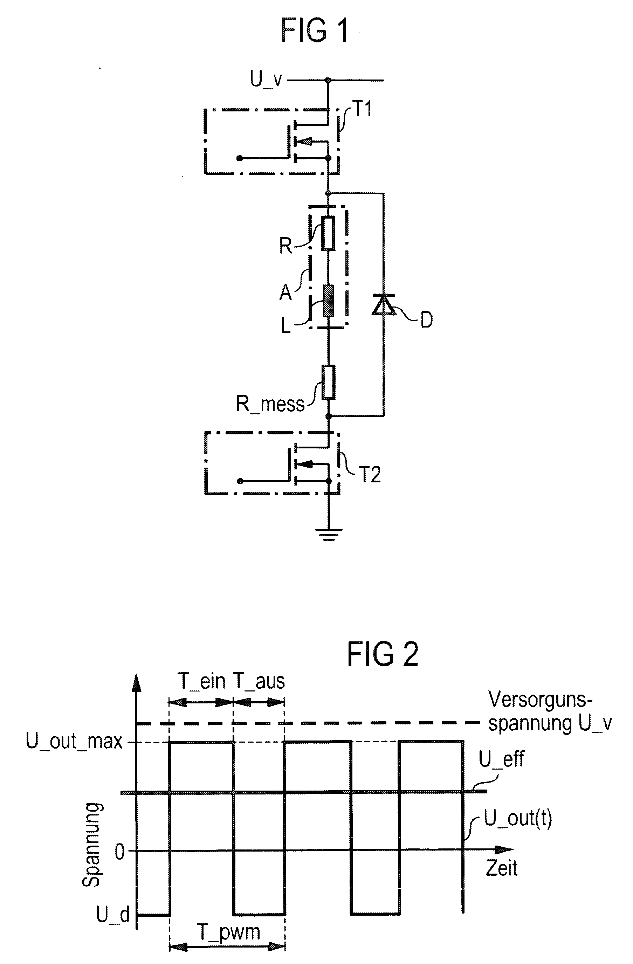

Die wesentlichen Elemente eines Lastkreises, auf den das erfindungsgemäße Verfahren anwendbar ist, sind in Figur 1 dargestellt. Der Lastkreis umfasst eine Reihenschaltung eines ersten steuerbaren Schaltmittels T1, eines induktiven Verbrauchers in Form eines elektrischen Aktuators A, der durch ein vereinfachendes Ersatzschaltbild in Form eines ohmschen Widerstandes R und einer Induktivität L dargestellt ist, eines Messmittels R_mess, im einfachsten Fall in Form eines ohmschen Widerstandes (Shunt Widerstand), und eines zweiten steuerbaren Schaltmittels T2. Parallel zum Aktuator A und zum Messwiderstand R_mess ist eine Freilaufdiode D geschaltet, wobei die Anode der Diode an einem Anschluss des ersten Schaltmittels und die Kathode der Diode an einem Anschluss des zweiten Schaltmittels angeschlossen ist. Ein Anschluss des ersten Schaltmittels T1 ist mit einer nicht dargestellten Versorgungsspannungsquelle verbunden. Ein Anschluss des zweiten Schaltmittels T2 ist mit Masse verbunden. In Figur 1 sind beide Schaltmittel T1 und T2 als Feldeffekttransistoren dargestellt. Grundsätzlich ist aber jede Art von steuerbaren Schaltmitteln, insbesondere jede Art von Transistoren, denkbar.

Das erste Schaltmittel T1 dient zur Inbetriebsetzung oder Außerbetriebsetzung des Aktuators A. Das zweite Schaltmittel T2 wird von einem nicht dargestellten Steuergerät mit einem getakteten PWM-Signal - im folgenden auch als pulsweitenmoduliertes Steuersignal bezeichnet - beaufschlagt und dient zur Steuerung des Stromflusses durch den Lastkreis und somit auch durch den Aktuator A. In einer alternativen Ausführungsform ist es auch denkbar, dass das erste Schaltmittel T1 mit dem pulsweitenmodulierten Steuersignal beaufschlagt wird und das zweite Schaltmittel T2 entsprechend zur Inbetriebsetzung oder Außerbetriebsetzung des Aktuators A dient.

Bei den folgenden Ausführungen wird immer davon ausgegangen, dass der Aktuator A in Betrieb gesetzt ist, das heißt das erste Schaltmittel T1 geschlossen oder durchgeschaltet ist und einen Stromfluss durch den Lastkreis ermöglicht. Während einer Einschaltzeit, das heißt während das zweite Schaltmittel T2 geschlossen ist, fließt ein Strom von der Betriebsspannungsquelle über den Lastkreis nach Masse. Während dieser Zeit wird die Induktivität L geladen. Ist das zweite Schaltmittel T2 geöffnet, so wird die in der Induktivität L gespeicherte Energie durch einen Stromfluss über die Freilaufdiode D, die dann in Durchlassrichtung arbeitet, abgebaut. Diese Zeitspanne wird auch als Ausschaltzeit bezeichnet.

In Figur 2 ist schematisch ein typischer Verlauf der Spannung am Aktuator A über der Zeit dargestellt. Während der Einschaltzeit T_ein, in der das zweite Schaltmittel T2 durchgeschaltet ist, liegt eine positive Maximalspannung U_out_max am Aktuator A an, die im Wesentlichen bestimmt wird durch die Versorgungsspannung U_v, sowie die Spannungsabfälle an den beiden Schaltmitteln T1 und T2. Die beiden Schaltmittel T1 und T2 wirken im durchgeschalteten Zustand wie ohmsche Widerstände, so dass der Spannungsabfall an den Schaltmitteln T1 und T2 abhängig ist von dem Wert des durchfließenden Stroms und von dem jeweiligen Widerstandswert des Schaltmittels. Der Wert der Maximalspannung U_out_max ergibt sich somit zu

$$U\_out\_max = U\_v-(I*R1 + I*R2) \qquad\qquad (I)$$

Dabei ist U_v die Versorgungsspannung, I der durch den Lastkreis fließende Strom, R1 der ohmsche Widerstandswert des ersten Schaltmittels T1 im durchgeschalteten Zustand und R2 der ohmsche Widerstandswert des zweiten Schaltmittels T2 im durchgeschalteten Zustand. Die Versorgungsspannung U_v wird durch Messung bestimmt. Der Strom wird mit Hilfe des Messmittels R_mess ermittelt. Ist das Messmittel R_mess beispielsweise als ohmscher Widerstand (Shunt Widerstand) ausgeführt, so wird der Strom indirekt über eine Messung des Spannungsabfalls am Messmittel bestimmt. Die Widerstandswerte R1 und R2 der Schaltmittel T1 und T2 im durchgeschalteten Zustand können aus einem strom- und temperaturabhängigen Kennfeld, gegebenenfalls mit Hilfe von Interpolation, ausgelesen werden. Alternativ dazu kann aber auch vorgesehen sein, die Spannungsabfälle an den Schaltmitteln T1 und T2 unmittelbar zu messen.

Während der Ausschaltzeit T_aus, in der das zweite Schaltmittel T2 geöffnet ist, liegt am Aktuator eine negative Minimalspannung U_out_min an, die im Wesentlichen vom Spannungsabfall U_d an der Freilaufdiode D abhängt, so dass vereinfachend gilt

$$U\_out\_min = U\_d \qquad\qquad (II)$$

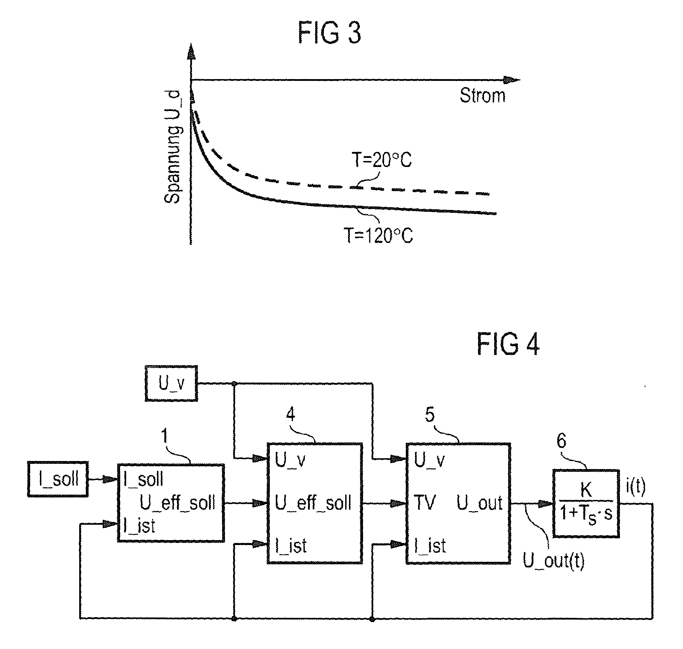

Der Spannungsabfall U_d an der Freilaufdiode D hängt seinerseits wiederum vom durchfließenden Strom und von der Bauteiltemperatur der Freilaufdiode D ab. Eine Kennlinie, die diese Abhängigkeit zeigt ist in Figur 3 dargestellt.

Entscheidend für den zu steuernden Stromfluss durch den Aktuator A ist letztendlich der Effektivwert U_eff des Spannungsverlaufs am Aktuator A. Dieser Effektivwert U_eff ist in Figur 2 durch eine breite Linie angedeutet und ergibt sich rechnerisch zu

$$U\_eff = U\_out\_max * TV + U\_out\_min * (1-TV) \qquad\qquad (III)$$

Dabei sind U_out_max die Maximalspannung am Aktuator A im durchgeschalteten Zustand des zweiten Schaltmittels T2, U_out_min die Minimalspannung am Aktuator A im geöffneten Zustand des zweiten Schaltmittels T2 und das TV das Tastverhältnis des PWM-Steuersignals, das sich als Verhältnis der Einschaltzeit T_ein zur Periodendauer T_pwm ergibt.

Geht man vereinfachend wieder davon aus, dass die Minimalspannung U_out_min am Aktuator A im Wesentlichen nur von der Spannung U_d an der Freilaufdiode D bestimmt wird, ergibt sich die Effektivspannung am Aktuator A zu

$$U\_eff = U\_out\_max * TV + U\_d * (1-TV) \qquad (IV)$$

Diese Gleichung ist gültig, solange der Stromfluss durch den Lastkreis während der gesamten Ausschaltzeit T_aus, also im geöffneten Zustand des zweiten Schaltmittels T2, aufrechterhalten bleibt. Dies ist aber nur dann der Fall, wenn die während der Einschaltzeit T_ein in der Induktivität L induzierte Spannung dazu ausreicht. Ein geringfügiger Abfall der Stromstärke und somit der Spannung U_d an der Freilaufdiode D und der Minimalspannung U_out_min am Aktuator A ist zwar auch bei ausreichender Induktionsspannung in der Induktivität L feststellbar, aus Gründen der Vereinfachung ist dieser Aspekt aber weder in Figur 2 noch in Gleichung (IV) berücksichtigt. Reicht die Induktionsspannung in der Induktivität L aber nicht aus, um den Stromfluss durch den Aktuator A während der gesamten Ausschaltzeit T_aus aufrecht zu erhalten und fällt der Strom I im Lastkreis in Folge dessen vor Ende der Peridendauer T_pwm auf Null ab, so muss dieser Effekt bei der Berechnung der Effektivspannung am Aktuator A berücksichtigt werden.

Hierzu wird ein Korrekturfaktor F_kor verwendet, der seinerseits abhängig ist von dem einzustellenden Tastverhältnis TV. Vorteilhaft können zusätzlich aber auch eine oder mehrere der folgenden Größen bei der Bestimmung des Korrekturfaktors F_kor berücksichtigt werden: Maximalspannung U_out_max, Spannung U_d an der Freilaufdiode D, Peridendauer T_pwm des pulsweitenmodulierten Steuersignals, ohmsche Widerstände des Aktuators A und der Verbindungsleitungen sowie Induktivität L des Aktuators A. Die Effektivspannung U_eff am Aktuator A ergibt sich bei Berücksichtigung dieses Korrekturfaktors somit zu

$$U\_eff = U\_out\_max * TV + U\_d * (1-TV) * F\_kor \qquad (IV)$$

$$mit\ F\_kor = f(TV, U\_out\_max, U\_d, T\_pwm, R, L)$$

In Figur 4 ist ein Blockschaltbild eines Regelkreises zur Regelung des Stromflusses durch einen Lastkreis gemäß Figur 1 dargestellt. Einer Effektivspannungs-Berechnungseinheit 1 wird ein Aktuator-Sollstrom I_soll als Sollgröße und der in dem Aktuator A fließende, gemessene Aktuator-Iststrom I_ist als Istgröße zugeführt. Abhängig von diesen Größen wird in der Effektivspannungs-Berechnungseinheit 1 die Soll-Effektivspannung U_eff_soll am Aktuator A bestimmt. Vorzugsweise wird hierzu in der Effektivspannungs-Berechnungseinheit 1 eine Kombination aus Vorsteuerung und Regelung eingesetzt.

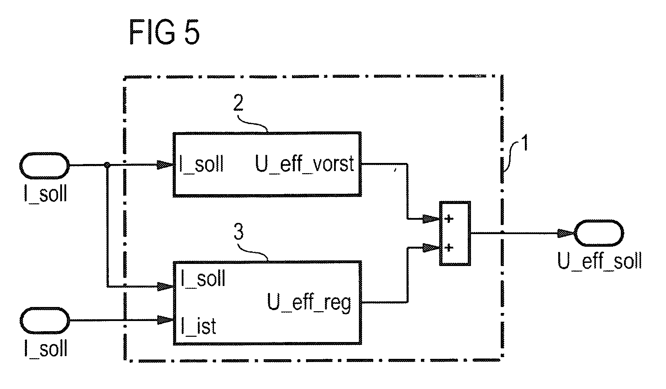

Ein entsprechendes Blockschaltbild ist in Figur 5 dargestellt. Zum einen wird in einem Vorsteuerungsglied 2 abhängig vom Aktuator-Sollstrom I_soll ein Effektivspannungs-Vorsteuerwert U_eff_vorst bestimmt. Zum anderen wird in einem Regelungsglied 3, das beispielsweise als PID-Regler ausgeführt ist, aus dem Aktuator-Sollstrom I_soll und dem Aktuator-Iststrom I_ist durch Differenzbildung eine Regelabweichung bestimmt und daraus ein Effektivspannungs-Regelungswert U_eff_reg ermittelt. Der gewünschte Effektivspannungs-Sollwert U_eff_soll am Aktuator A ergibt sich als Summe aus dem Effektivspannungs-Vorsteuerwert U_eff_vorst und dem Effektivspannungs-Regelungswert U_eff_reg. Alternativ zu einer kombinierten Vorsteuerung und Regelung kann auch nur ein Vorsteuerungsglied 2 oder ein Regelungsglied 3 als Effektivspannungs-Berechnungseinheit 1 vorgesehen sein. Im Falle einer einfachen Steuerung kann folgerichtig die Rückkopplung des Aktuator-Iststroms I_ist auf die Effektivspannungs-Berechnungseinheit 1 entfallen.

Der gewünschte Effektivspannungswert U_eff_soll am Aktuator A wird einer Tastverhältnis-Berechnungseinheit 4 zugeführt. Dieser Einheit wird außerdem die Versorgungsspannung U_v und der Aktuator-Iststrom I_ist zugeführt. Abhängig von diesen Größen wird gemäß der Gleichung

$$TV = \frac{U\_eff\_soll - U\_d * F\_kor}{U\_out\_\max - U\_d * F\_kor} \qquad (V)$$

das notwendige Tastverhältnis TV des PWM-Steuersignals berechnet. Die Gleichung (V) ergibt sich dabei durch entsprechendes Auflösen der Gleichung (IV) nach dem Tastverhältnis TV.

Das berechnete Tastverhältnis TV wird zusammen mit der Versorgungsspannung U_v und dem Aktuator-Iststrom I_ist einer PWM-Treiberstufe 5 zugeführt, die abhängig von diesen Größen eine Ausgangsspannung U_out(t) an die Regelstrecke 6 ausgibt, so dass sich am Aktuator A der gewünschte Effektivstrom U_eff_soll ergibt.

## Patentansprüche

1. Verfahren zum Steuern oder Regeln des Stromflusses durch einen induktiven Verbraucher (A) mit einem in Reihe zu dem induktiven Verbraucher (A) geschalteten steuerbaren Schaltmittel (T2), und mit einer parallel zu dem induktiven Verbraucher (A) geschalteten Freilaufdiode (D), wobei dem Schaltmittel (T2) ein pulsweitenmoduliertes Steuersignal zugeführt wird und der Verbraucher (A) von einem durch ein Tastverhältnis (TV) des pulsweitenmodulierten Steuersignals bestimmten Strom durchflossen wird, **dadurch gekennzeichnet, dass** das Tastverhältnis abhängig von einer Versorgungsspannung (U_v), einem Sollwert der Effektivspannung (U_eff_soll) am Verbraucher (A), einem durch den Verbraucher (A) fließenden Ist-Strom (I_ist), einem Widerstandswert (R2) des Schaltmittels (T2) im durchgeschalteten Zustand des Schaltmittels (T2) und einer Spannung (U_d) an der Freilaufdiode (D) im geöffneten Zustand des Schaltmittels (T2) festgelegt wird.

2. Verfahren nach Anspruch 1, **dadurch gekennzeichnet, dass** der Widerstandswert (R2) des Schaltmittels (T2) im durchgeschalteten Zustand des Schaltmittels (T2) abhängig von dem durch den Verbraucher (A) fließenden Ist-Strom (I_ist) und von der Bauteiltemperatur des Schaltmittels (T2) bestimmt wird.

3. Verfahren nach einem der Ansprüche 1 oder 2, **dadurch gekennzeichnet, dass** die Spannung (U_d) an der Freilaufdiode (D) im geöffneten Zustand des Schaltmittels (T2) abhängig von dem durch den Verbraucher (A) fließenden Ist-Strom (I_ist) und von der Bauteiltemperatur der Freilaufdiode (D) bestimmt wird.

4. Verfahren nach Anspruch 1, **dadurch gekennzeichnet, dass** das Tastverhältnis abhängig von einem Korrekturfaktor (F_kor) festgelegt wird, wobei der Korrekturfaktor (F_kor) abhängig ist von dem einzustellenden Tastverhältnis (TV)

5. Verfahren nach Anspruch 4, **dadurch gekennzeichnet, dass** der Korrekturfaktor F_kor zusätzlich von einer oder mehreren der folgenden Größen abhängt: dem durch den Verbraucher (A) fließenden Ist-Strom (I_ist), der Periodendauer T_pwm des pulsweitenmodulierten Steuersignals, dem Widerstandswert (R2) des Schaltmittels (T2) im durchgeschalteten Zustand des Schaltmittels (T2), der Spannung (U_d) an der Freilaufdiode (D), ohmschen Widerständen des Verbrauchers (A) und der Verbindungsleitungen sowie einer Induktivität (L) des Verbrauchers (A).

6. Verfahren nach einem der vorhergehenden Ansprüche, **dadurch gekennzeichnet, dass** der Effektivspannungs-Sollwert (U_eff_soll) als Summe aus einem Effektivspannungs-Vorsteuerwert (U_eff_vorst) und einem Effektivspannungs-Regelungswert (U_eff_reg) gebildet wird, wobei der Effektivspannungs-Vorsteuerwert (U_eff_vorst) abhängig von einem Soll-Strom (I_soll) durch den Verbraucher (A) gebildet wird und der Effektivspannungs-Regelungswert (U_eff_reg) abhängig von dem Soll-Strom (I_soll) durch den Verbraucher (A) und dem Ist-Strom durch den Verbraucher (A) gebildet wird.

## Claims

1. Method for controlling or regulating the flow of current through an inductive load (A) using a controllable switching means (T2) which is connected in series with the inductive load (A) and using a freewheeling diode (D) which is connected in parallel with the inductive load (A), with a pulse-width-modulated control signal being supplied to the switching means (T2) and a current which is determined by a pulse duty factor (TV) of the pulse-width-modulated control signal flowing through the load (A), **characterized in that** the pulse duty factor is defined as a function of a supply voltage (U_v), a setpoint value of the effective voltage (U_eff_set) across the load (A), an actual current (I_act) flowing through the load (A), a resistance value (R2) of the switching means (T2) in the state in which the switching means (T2) is switched on, and a voltage (U_d) across the freewheeling diode (D) in the open state of the switching means (T2).

2. Method according to Claim 1, **characterized in that** the resistance value (R2) of the switching means (T2) in the state in which the switching means (T2) is switched on is determined as a function of the actual current (I_act) flowing through the load (A) and of the component temperature of the switching means (T2).

3. Method according to either of Claims 1 and 2, **characterized in that** the voltage (U_d) across the freewheeling diode (D) in the open state of the switching means (T2) is determined as a function of the actual current (I_act) flowing through the load (A) and of the component temperature of the freewheeling diode (D).

4. Method according to Claim 1, **characterized in that** the pulse duty factor is defined as a function of a correction factor (F_cor), with the correction factor (F_cor) being dependent on the pulse duty factor (TV) to be set.

5. Method according to Claim 4, **characterized in that** the correction factor (F_cor) additionally depends on one or more of the following variables: the actual current (I_act) flowing through the load (A), the period duration (T_pwm) of the pulse-width-modulated control signal, the resistance value (R2) of the switching means (T2) in the state in which the switching means (T2) is switched on, the voltage (U_d) across the freewheeling diode (D), non-reactive resistances of the load (A) and of the connecting lines, and also an inductance (L) of the load (A).

6. Method according to one of the preceding claims, **characterized in that** the setpoint effective voltage value (U_eff_set) is formed as the sum of an effective voltage pilot control value (U_eff_pilot) and an effective voltage regulation value (U_eff_reg), with the effective voltage pilot control value (U_eff_pilot) being formed as a function of a setpoint current (I_set) through the load (A), and the effective voltage regulation value (U_eff_reg) being formed as a function of the setpoint current (I_set) through the load (A) and the actual current through the load (A).

**Revendications**

1. Procédé pour commander ou régler le flux de courant passant par un consommateur inductif (A) avec un moyen de commutation (T2) pilotable connecté en série avec le consommateur inductif (A) et avec une diode de marche à vide (D) connectée en parallèle avec le consommateur inductif (A), dans lequel un signal de commande modulé en largeur d'impulsion est conduit vers le moyen de commutation (T2) et le consommateur (A) est parcouru par un courant déterminé par un taux d'impulsions (TV) du signal de commande modulé en largeur d'impulsion, **caractérisé en ce que** le taux d'impulsions est déterminé en fonction d'une tension d'alimentation (U_v), d'une valeur nominale de la tension efficace (U-eff-soll) sur le consommateur inductif (A), d'un courant réel (I_ist) passant par le consommateur (A), d'une valeur de résistance (R2) du moyen de commutation (T2) à l'état connecté du moyen de commutation (T2) et d'une tension (U_d) sur la diode de marche à vide (D) à l'état ouvert du moyen de commutation (T2).

2. Procédé selon la revendication 1, **caractérisé en ce que** la valeur de résistance (R2) du moyen de commutation (T2), à l'état connecté du moyen de commutation (T2), est déterminée en fonction du courant réel (I_ist) passant par le consommateur (A) et de la température des composants du moyen de commutation (T2).

3. Procédé selon l'une quelconque des revendications 1 ou 2, **caractérisé en ce que** la tension (U_d) sur la diode de marche à vide, (D) à l'état ouvert du moyen de commutation (T2), est déterminée en fonction du courant réel (I_ist) passant par le consommateur (A) et de la température des composants de la diode de marche à vide (D).

4. Procédé selon la revendication 1, **caractérisé en ce que** le taux d'impulsions est déterminé en fonction d'un facteur de correction (F_kor), dans lequel le facteur de correction (F_kor) est fonction du taux d'impulsions (TV) à régler.

5. Procédé selon la revendication 4, **caractérisé en ce que** le facteur de correction F_kor est fonction, en outre, d'une ou de plusieurs des grandeurs suivantes : du courant réel (I_ist) passant par le consommateur (A), de la durée de période T_pwm du signal de commande modulé en largeur d'impulsion, de la valeur de résistance (R2) du moyen de commutation (T 2) à l'état connecté du moyen de commutation (T2), de la tension (U_d) sur la diode de marche à vide (D) , des résistances ohmiques du consommateur (A) et des lignes de connexion ainsi que d'une inductance (L) du consommateur (A).

6. Procédé selon l'une quelconque des revendications précédentes, **caractérisé en ce que** la valeur nominale de la tension efficace (U_eff_soll) est formée comme somme à partir d'une valeur de réglage pilote de la tension efficace (U_eff_vorst) et d'une valeur de réglage de la tension efficace (U_eff_reg), dans lequel la valeur de réglage pilote de la tension efficace (U_eff_vorst) est formée en fonction d'un courant nominal (I_soll) passant par le consommateur (A) et la valeur de réglage de la tension efficace (U_eff_reg) est formée en fonction du courant nominal (I_soll) passant par le consommateur (A) et du courant réel passant par le consommateur (A).

# FIG 1

# FIG 2

## FIG 3

## FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0895264 A